# EUROPÄISCHE PATENTANMELDUNG

(11) **EP 1 834 683 A1**
(43) Veröffentlichungstag der Anmeldung: **19.09.2007**
(21) Anmeldenummer: 06005148.9
(22) Anmeldetag: 14.03.2006
(51) Int. Cl.: B01D 39/16, D01F 6/76

(54) **Stützgewebe und ein das Gewebe enthaltendes Filterelement**

(71) Anmelder: Diolen Industrial Fibers B.V., 6827 AV Arnhem (NL); Ticona GmbH, 65451 Kelsterbach (DE)
(72) Erfinder: Krins, Bastiaan, 6951, MJ Dieren (NL); Vieth, Christian, 63939, Wörth (DE); Konopik, Axel, 42287, Wuppertal (DE); Dortmans, Johannes, Petrus, Maria, 6891, ED Rozendaal (NL); Brück, Martin, 61276, Weilrod (DE)
(74) Vertreter: Oberlein, Gerriet H. R.

(57) **Zusammenfassung**

Vorgestellt werden ein Stützgewebe, insbesondere für den Einsatz in Filtermedien, bestehend aus Garnen aus Multifilamenten, welche zu mindestens 90 Gew.-% aus einem unvernetzten schwefelhaltigen polymeren Material bestehen und ein das Gewebe enthaltendes Filterelement.

## Beschreibung

Die Erfindung betrifft ein Stützgewebe, vorzugsweise für den Einsatz in Filtermedien.

Filtermedien werden am häufigsten in Form von mechanisch verfestigten Vliesen in Abreinigungsfiltern eingesetzt. Ihr Vorteil liegt in der gleichmäßigeren Verteilung der Fasern (Faserdurchmesser 10 bis 30 µm), da die Vliese nicht gewebt sondern regellos angeordnet sind. Dies verursacht eine Tiefenspeicherwirkung, so dass auch feinste Teilchen zurückgehalten werden. Bei einem Lückengrad zwischen 0,7 und 0,9 sowie Dicken von 1,5 bis 3 mm liegen die Flächengewichte zwischen 250 bis 700 g/m². Die größte Bedeutung besitzen Nadelfilze, die durch Vernadeln von Stapelfasern hergestellt werden.

Stützgewebe für Filtermedien sind an sich bekannt, Beispielsweise besitzen Filtermedien aus Nadelfilz zur Verbesserung der Festigkeit sowie der Stabilität i.d.R. ein Stützgewebe, das beidseitig mit den Filzen vernadelt ist.

Als Stützgewebe für Filtermedien in der Heißgasfiltration sind Gewebe aus Polyphenylensulfid (PPS) - Stapelfasern bekannt.

In einem von außen nach innen vom jeweiligen Permeat durchströmten Filtermedium, das üblicherweise in gefalteter Form eingesetzt wird, ruhen die Falten des Filtermediums innen auf einer Lochzarge. Die einzelnen Falten werden durch das innenliegende Stützgewebe abgestützt, so dass das Permeat frei abströmen kann. Wird das Filtermedium durchströmt, entsteht bedingt durch den Volumenstrom und die Viskosität des zu filtrierenden Mediums ein Differenzdruck an den Falten des balgförmigen Filtermediums. Die resultierenden Kräfte müssen vom Stützgewebe aufgenommen werden.

Stützgewebe sind auch bekannt aus Filterschläuchen, die in Filterschlauchanlagen eingesetzt werden. Diese Filterschläuche werden durch Druckimpulse abgereinigt und somit mechanisch belastet. Die resultierenden Kräfte müssen vom Stützgewebe aufgenommen werden.

Eine geringe Standzeit des Stützgewebes wirkt sich auf die Standzeit des Filtermediums und somit auch auf die Standzeit eines Filterelements, welches das Filtermedium enthält, nachteilig aus. Veränderungen des Volumenstromes führen zu Biegeschwellbeanspruchungen des gefalteten Filtermediums. Eine geringe Dimensionsstabilität des Stützgewebes wirkt sich ebenfalls nachteilig auf die Lebensdauer des Filtermediums und somit auf die Lebensdauer des Filterelements aus, welches das Filtermedium enthält.

Daher stellt sich die vorliegende Erfindung die Aufgabe, ein Stützgewebe zur Verfügung zu stellen, das dem gestützten Filtermedium eine höhere Standzeit verleiht.

Die Aufgabe wird gelöst durch ein Stützgewebe, insbesondere für den Einsatz in Filtermedien, das dadurch gekennzeichnet ist, dass das Stützgewebe aus Garnen aus Multifilamenten besteht, welche zu mindestens 90 Gew.-% aus einem unvernetzten, schwefelhaltigen, polymeren Material bestehen.

Verwendet werden können alle unvernetzten, polymeren Materialien, die Schwefelbrücken (-S-) enthalten. Eine Klasse der letztgenannten Materialien sind die Polyarylensulfide. Polyarylensulfide im weitesten Sinne sind lineare, verzweigte oder vernetzte Polymere, die Arylensulfideinheiten enthalten. Polyarylensulfide und deren Herstellung sind beispielsweise in "Ullmann's Encyclopedia of Industrial Chemistry", Volume A21, B. Elvers, S. Hawkins und G. Schulz (Eds.), VCH, Weinheim-New York 1992, S. 463-472 beschrieben, worauf Bezug genommen wird. Erfindungsgemäße Polyarylensulfide sind unvernetzte Polyarylenthioether mit wiederkehrenden Einheiten der Formel:

-[(Ar¹)ₙ-X]ₘ-[(Ar²)ᵢ-Y]ⱼ-[(Ar³)ₖ-Z]ₗ-[(Ar⁴)ₒ-W]ₚ- (1)

worin Ar¹, Ar², Ar³, Ar⁴ bzw. W, X, Y und Z unabhängig voneinander gleich oder verschieden sind, die Indizes n, m, i, j, k, l, o und p unabhängig voneinander Null oder ganze Zahlen 1, 2, 3 oder 4 sind, wobei ihre Summe mindestens 2 ist, Ar¹, Ar², Ar³ und Ar⁴ Aryleneinheiten mit 6 bis 18 C-Atomen sind und W, X, Y und Z zweiwertige Verknüpfungsgruppen darstellen, ausgewählt aus -SO₂-, -S-, -SO-, - CO, -O-, -COO- oder Alkylen- oder Alkylidengruppen mit 1 bis 6 C-Atomen, und mindestens eine der Verknüpfungsgruppen W, X, Y oder Z aus -S- besteht. Die Aryleneinheiten Ar¹, Ar², Ar³ und Ar⁴ können wahlweise substituiert oder unsubstituiert sein.

Bevorzugte Arylensysteme sind Phenylen, Biphenylen, Naphthylen, Anthracen und Phenanthren. Vorteilhaft enthält das Polyarylensulfid mindestens 30 mol-%, bevorzugt mindestens 50 mol% und insbesondere mindestens 70 mol-% Arylensulfideinheiten. Bevorzugtes Polyarylensulfid ist lineares Polyphenylensulfid (PPS). Dieses enthält im allgemeinen mindestens 50 mol-% und insbesondere mindestens 70 mol-% Phenylensulfideinheiten und ist beispielsweise unter dem Namen Fortron^{®} bekannt.

PPS zeichnet sich durch seine hervorragenden mechanischen Eigenschaften, seine hohe thermische Beständigkeit mit Gebrauchstemperaturen bis 190 °C und seine sehr gute Chemikalienbeständigkeit aus.

Das erfindungsgemäße Stützgewebe aus Garnen aus Polyarylensulfid-Multifilamenten verleiht einem Filtermedium und somit auch einem Filterelement, welches das Filtermedium enthält, eine deutlich höhere Lebensdauer als die aus dem Stand der Technik bekannten Stützgewebe aus PPS-Stapelfasern. Dies ist insbesondere auf die erheblich höhere Festigkeit bei zumeist geringerer Dehnung, d.h. auf einen höheren Modul der Polyarylensuffid-Muitifilamente im Vergleich zu PPS-Stapelfasern zurückzuführen.

Zudem ermöglichen die vorteilhaften Eigenschaften des erfindungsgemäßen Stützgewebes bei gleicher Standzeit des gestützten Filtermediums den Einsatz von weniger Stützgewebematerial als bei aus dem Stand der Technik bekannten Stützgeweben.

Das erfindungsgemäße Stützgewebe kann mit dem gestützten Filtermedium beispielsweise durch konventionelle mechanische Vernadelung und/oder hydrodynamisch durch Wasserstrahlverfestigung,verflochten werden. Die mechanische Vernadelung führt üblicherweise zu einer stärkeren Verflechtung. Bei Anwendung des Wasserstrahlverfahrens kann der resultierende Filter jedoch Vorteile in Bezug auf einen geringeren Druckabfall und eine höhere Filterleistung aufweisen. Im Einzelfall kann auch eine Kombination von Verflechtungs-Verfahren bevorzugt sein.

In einer weiteren vorteilhaften Ausführungsform weist das erfindungsgemäße Stützgewebe Garne mit einer Reißfestigkeit von mindestens 30 cN/tex, bevorzugt von mindestens 40 cN/tex auf.

Besonders bevorzugt weist das erfindungsgemäße Stützgewebe Garne mit einer Reißfestigkeit von bis zu 70 cN/tex und ganz besonders bevorzugt von bis zu 60 cN/tex auf.

In einer weiteren bevorzugten Ausführungsform weist das erfindungsgemäße Stützgewebe Garne mit einer Bruchdehnung zwischen 15 % und 30 % auf.

Ferner weist das erfindungsgemäße Stützgewebe vorzugsweise Garne mit einem Garntiter auf, der zwischen 200 dtex und 1600 dtex und insbesondere zwischen 800 dtex und 1200 dtex liegt.

In einer ganz besonders bevorzugten Ausführungsform weist das erfindungsgemäße Stützgewebe PPS-Multifilamente 1 und 2 auf, weiche die in der untenstehenden Tabelle 1 zusammengefassten Eigenschaften aufweisen, die im Vergleich zu den entsprechenden Eigenschaften von PPS-Stapelfasern dargestellt sind. Die Tabelle zeigt, dass die PPS-Multifilamente 1 und 2 im Vergleich zur PPS-Stapelfasern eine mehr als verdoppelte Reißfestigkeit und eine annähernd verdoppelte Reißarbeit bei einer verringerten Reißdehnung aufweisen. Bei 1 % Dehnung haben die PPS-Multifilamente 1 und 2 eine etwa zweieinhalbfach größere Festigkeit. Bei 5 % Dehnung haben die PPS-Multifilamente 1 sogar eine etwa dreifach größere Festigkeit und die PPS-Muitifilamente 2 eine etwa zweifach größere Festigkeit als die PPS-Stapelfasergarne. Die Werte für den Heißluftschrumpf bei 1 und 5 mN/tex sind für die PPS-Multifilamente 2 etwa gleich groß wie für die PPS-Stapelfasern.

**Tabelle 1:**

| | PPS Stapelfasern | PPS Multifilamente 1 | PPS Multifilamente 2 |
|---|---|---|---|
| Titer | 920 dtex | 1100 dtex f200 | 1100 dtex f200 |
| Reißfestigkeit | 26,0 cN/tex | 55cN/tex | 53 cN/tex |
| Reißdehnung | 26 % | 18% | 23 % |
| Festigkeit bei 1 % Dehnung | 2,0 cN/tex | 5,3 cN/tex | 5,0 cN/tex |
| Festigkeit bei 5 % Dehnung | 5,2 cN/tex | 16,6 cN/tex | 11,6 cN/tex |
| Reißarbeit | 37 J/g | 53 J/g | 62 J/g |
| Heißluftschrumpf bei 1 mN/tex | 3,4 % | 7,5 % | 3,0 % |
| Heißluftschrumpf bei 5 mN/tex | 1,2 % | 5,0% | 1,4 % |

Ein aus den PPS-Filamenten hergestelltes erfindungsgemäßes Stützgewebe wird demnach die auf das Filtermedium einwirkenden Druck- und Biegeschwellbelastungen erheblich effizienter auffangen als ein Stützgewebe aus PPS-Stapelfasern und damit die Lebensdauer des Filtermediums und somit auch die Lebensdauer eines Filterelements, welches das Filtermedium enthält, erhöhen,

Ferner erlaubt das aus PPS-Multifilamenten hergestellte erfindungsgemäße Stützgewebe, ein Gewebe zur Verfügung zu stellen, das die gleiche Lebensdauer wie das bekannte Stützgewebe aus PPS-Stapolfasern aufweist, jedoch zu seiner Herstellung weniger Fasermaterial benötigt.

Daher besteht die Erfindung ferner in einem Filterelement, das ein erfindungsgemäßes Stützgewebe enthält.

Vorzugsweise ist das erfindungsgemäße Filterelement ein Abreinigungsfilter.

In einer bevorzugten Ausführungsform ist das erfindungsgemäße Filterelement, bzw. der erfindungsgemäße Abreinigungsfilter auf einer oder auf beiden Seiten mit einem Filtermedium versehen, wobei das Filtermedium z.B. ein Vlies ist, das z.B. durch Nadeln verfestigt ist.

Die in der vorliegenden Erfindung aufgeführten Faserdaten werden gemäß ASTM D885 bestimmt, wobei die Bestimmung des Heißluftschrumpfs mit der Maßgabe erfolgt, dass die Messung bei 100 °C, bei einer Fadenspannung von 1 bzw. 5 mN/tex und für eine Dauer von 2 Minuten durchgeführt wird.

## Patentansprüche

1. Stützgewebe, insbesondere für den Einsatz in Filtermedien, **dadurch gekennzeichnet, dass** das Stützgewebe aus Garnen aus Multifilamenten besteht, welche zu mindestens 90 Gew.-% aus einem unvernetzten schwefelhaltigen polymeren Material bestehen.

2. Stützgewebe nach Anspruch 1, **dadurch gekennzeichnet, dass** das unvernetzte schwefelhaltige polymere Material ein Polyarylensulfid ist.

3. Stützgewebe nach Anspruch 2, **dadurch gekennzeichnet, dass** das Polyarylensulfid ein lineares Polyphenylensulfid ist.

4. Stützgewebe nach einem oder mehreren der Ansprüche 1 bis 3, **dadurch gekennzeichnet, dass** die Garne eine Reißfestigkeit von mindestens 30 cN/tex, besonders bevorzugt von mindestens 40 cN/tex aufweisen.

5. Stützgewebe nach einem oder mehreren der Ansprüche 1 bis 4, **dadurch gekennzeichnet, dass** die Garne eine Reißfestigkeit von bis zu 70 cN/tex, bevorzugt bis zu 60 cN/tex, aufweisen.

6. Stützgewebe nach einem oder mehrerer der Ansprüche 1 bis 5, **dadurch gekennzeichnet, dass** die Garne eine Bruchdehnung zwischen 15 % und 30 % aufweisen.

7. Stützgewebe nach einem oder mehrerer der Ansprüche 1 bis 6, **dadurch gekennzeichnet, dass** die Garne einen Garntiter zwischen 200 dtex und 1600 dtex, bevorzugt zwischen 800 dtex und 1200 dtex, aufweisen.

8. Filterelement enthaltend ein Stützgewebe gemäß einem oder mehreren der Ansprüche 1 bis 7.

9. Filterelement nach Anspruch 8, **dadurch gekennzeichnet, dass** das Filterelement ein Abreinigungsfilter ist.

10. Filterelement nach Anspruch 8 oder 9, **dadurch gekennzeichnet, dass** das Stützgewebe auf einer oder auf beiden Seiten mit einem Filtermedium versehen ist.
